# EUROPÄISCHE PATENTSCHRIFT

(11) **EP 4 423 489 B1**
(45) Veröffentlichungstag und Bekanntmachung des Hinweises auf die Patenterteilung: **06.08.2025**
(21) Anmeldenummer: 22782519.7
(22) Anmeldetag: 22.09.2022
(51) Int. Cl.: G01N 22/00, G01P 5/08

(54) **SYSTEM ZUM ERKENNEN DES VORLIEGENS EINES FREMDKÖRPERS IN EINEM STRÖMUNGSFÄHIGEN MEDIUM UND ENTSPRECHENDES VERFAHREN**
SYSTEM FOR IDENTIFYING THE PRESENCE OF A FOREIGN BODY IN A FLOWABLE MEDIUM AND CORRESPONDING METHOD
SYSTÈME D'IDENTIFICATION DE LA PRÉSENCE D'UN CORPS ÉTRANGER DANS UN MILIEU FLUENT ET PROCÉDÉ CORRESPONDANT

(30) Priorität: 29.10.2021 DE 102021128381
(43) Veröffentlichungstag der Anmeldung: 04.09.2024
(73) Patentinhaber: Endress+Hauser Flowtec AG, 4153 Reinach (CH)
(72) Erfinder: EBRAHIMI, Mohammad Sadegh, 79539 Lörrach (DE); FRÜHAUF, Dietmar, 79539 Lörrach (DE); FREY, Volker, 79650 Schopfheim (DE); KUHNEN, Raphael, 79418 Schliengen (DE); DRAHM, Wolfgang, 85354 Freising (DE); PFLÜGER, Stefan, 80995 München (DE); HABERMEHL, Anne, 85435 Erding (DE); ZHU, Hao, 85354 Freising (DE)
(74) Vertreter: Endress + Hauser Group Services (Deutschland) AG+Co. KG
(86) Internationale Anmeldenummer: PCT/EP2022/076337
(87) Internationale Veröffentlichungsnummer: WO 2023/072487

(56) Entgegenhaltungen:
- US-A- 5 793 216
- US-A1- 2019 257 868

## Beschreibung

Die Erfindung betrifft ein System zum Erkennen des Vorliegens eines Fremdkörpers in einem strömungsfähigen Medium in einer Rohrleitung. Ferner betrifft die Erfindung ein Verfahren zum Erkennen des Vorliegens eines Fremdkörpers in einem Medium in einer Rohrleitung mit einem entsprechenden System.

In der Prozessindustrie werden strömungsfähige Medien in Rohrleitungen geführt. Hierbei ist es in Bereichen mit besonders hohen hygienischen Anforderungen, bspw. in der Lebensmittel-verarbeitenden Industrie, wünschenswert, Fremdkörper möglichst frühzeitig und sicher zu erkennen, also bspw. vor oder bei dem Abfüllen in ein Behältnis. Der Begriff Fremdkörper umfasst dabei alle festen Materialien, die in dem Medium aus Sicherheits- und/oder Qualitätssicherungsgründen prinzipiell unerwünscht sind. Dabei handelt es sich bspw. um Glasscherben, Gräten, Knochensplitter, Plastik- und Gummistückchen, Kies/Stein usw., aber auch um unerwünschte feste Stückchen in einem ansonsten flüssigen bis zähflüssig-breiigen Medium.

Die EP 18 53 900 A1 beschreibt ein System und ein Verfahren zur Erkennung des Vorliegens von Fremdkörpern in einem Medium. Darin werden sowohl Mikrowellen als auch Ultraschallwellen von jeweils einer dazu ausgestalteten Aussendeeinheit als Aussendesignale in das Medium ausgesandt. Anhand einer Auswertung von Empfangssignalen wird das Auftreten von Änderungen in dem Medium, insb. das Vorliegen eines Fremdkörpers, festgestellt. Die in der EP 18 53 900 A1 vorgestellte Lösung gibt allerdings keine Möglichkeit an, einen Fremdkörper von einer Gasblase zu unterscheiden. Dies ist insbesondere anspruchsvoll, für den Fall, dass die Gasblase und der Fremdkörper von prinzipiell gleicher Größe sind. Im Gegensatz zu Fremdkörpern stellen Gasblasen eine unbedenkliche Änderung in dem Medium dar.

Die Anmeldung US 2019/257 868 A1 offenbart ein System zum Erkennen des Vorliegens eines Fremdkörpers in einer Rohrleitung, bei der die Permittivität des Mediums bestimmt wird. Die Anmeldung US 5 793 216 A offenbart eine Rohrleitung mit einem Stauch-Abschnitt, welcher der Erzeugung einer geschichteten Multiphasenströmung dient, um den Durchfluss jeder Phase zu erkennen.

Aufgabe der Erfindung ist es daher, eine Möglichkeit anzugeben, um einen Fremdkörper in einem in einer Rohrleitung strömenden Medium sicher und zuverlässig zu erkennen und insbesondere auch von einer Gasblase unterscheiden zu können.

Die Aufgabe wird gelöst durch ein System zum Erkennen des Vorliegens eines Fremdkörpers in einem strömungsfähigen Medium in einer Rohrleitung und ein Verfahren zum Erkennen des Vorliegens eines Fremdkörpers in einem Medium in einer Rohrleitung. Bezüglich des Systems wird die Aufgabe gelöst durch ein System zum Erkennen des Vorliegens eines Fremdkörpers in einem strömungsfähigen Medium in einer Rohrleitung umfassend:
- eine Rohrleitung mit
   -- einem Leitungseinlaufabschnitt und
   -- einem sich an den Leitungseinlaufabschnitt in einer vorhergesehenen Strömungsrichtung anschließenden Stauch-Abschnitt,

   in welchem Stauch-Abschnitt in einer zu der Strömungsrichtung senkrechten Stauchrichtung die Querschnittsfläche der Rohrleitung gestaucht ist, im Vergleich zu der Querschnittsfläche der Rohrleitung in dem Leitungseinlaufabschnitt,
   wobei das Flächenmaß der Querschnittsfläche der Rohrleitung im Stauch-Abschnitt mit dem Flächenmaß der Querschnittsfläche der Rohrleitung im Leitungseinlaufabschnitt im Wesentlichen übereinstimmt;
- eine erste Aussende/Empfangseinheit in dem Leitungseinlaufabschnitt, welche dazu eingerichtet ist, Aussendesignale in ein in dem Leitungseinlaufabschnitt strömendes Medium einzubringen und Empfangssignale zu empfangen
- eine zweite Aussende/Empfangseinheit in dem Stauch-Abschnitt, die dazu eingerichtet ist, Aussendesignale in ein in dem Stauch-Abschnitt strömendes Medium einzubringen und Empfangssignale zu empfangen; und
- zumindest eine übergeordnete Einheit,

welche dazu eingerichtet ist, aus den jeweiligen Empfangssignalen eine mittlere Permittivität des Mediums in dem Leitungseinlaufabschnitt und dem Stauch-Abschnitt zu ermitteln und
das Vorliegen eines Fremdkörpers in dem Medium zu ermitteln, anhand zumindest eines Vergleichs der mittleren Permittivität in dem Stauch-Abschnitt mit der mittleren Permittivität in dem Leitungseinlaufabschnitt.

Die Rohrleitung ist also derart ausgebildet, dass sich die Form der Querschnittsfläche im Leitungseinlaufabschnitt von der Form der Querschnittsfläche im Stauch-Abschnitt unterscheidet, unter Beibehaltung desselben Flächenmaßes.

Bei Strömen von dem Leitungseinlaufabschnitt in den Stauch-Abschnitt erfährt ein Objekt in dem Medium, nämlich eine Gasblase oder ein Fremdkörper, einen Druckunterschied.

Handelt es sich bei dem Objekt um einen (in der Regel inkompressiblen) Fremdkörper, wird der Fremdkörper nicht gestaucht. Dadurch ändert sich der relative Anteil des Fremdkörpers entlang eines Pfades in der Querschnittsfläche. Er wird bspw. in der Stauchrichtung vergrößert. Dadurch ändert sich bei dem Übergang von dem Leitungseinlaufabschnitt in den Stauch-Abschnitt die mittlere Permittivität. Sprich die Permittivität entlang eines Pfades innerhalb der Querschnittsfläche des Stauch-Abschnitts unterscheidet sich von der mittleren Permittivität entlang eines dazu parallelen Pfades innerhalb der Querschnittsfläche des Leitungseinlaufabschnitts.

Handelt es sich bei dem Objekt dagegen um eine kompressible Gasblase, wird die Gasblase in dem Stauch-Abschnitt gestaucht. Aufgrund des konstanten Flächenmaßes von Stauch-Abschnitt und Leitungseinlaufabschnitt bleibt aber der relative Anteil der Gasblase entlang des Pfades in der Querschnittsfläche konstant. Dadurch entspricht die mittlere Permittivität entlang eines Pfades innerhalb der Querschnittsfläche des Stauch-Abschnitts der mittleren Permittivität entlang des entsprechenden dazu parallelen Pfades innerhalb der Querschnittsfläche des Leitungseinlaufabschnitts.

In einer Ausgestaltung des Systems umfasst die Rohrleitung einen sich an den Stauch-Abschnitt in der vorhergesehenen Strömungsrichtung anschließenden Leitungsauslaufabschnitt,
wobei die Querschnittsfläche des Leitungsauslaufabschnitts im Wesentlichen mit der Querschnittsfläche der Rohrleitung in dem Leitungseinlaufabschnitt übereinstimmt,
wobei das System eine dritte Aussende/Empfangseinheit in dem Leitungsauslaufabschnitt umfasst, welche dazu eingerichtet ist, Aussendesignale in ein in dem Leitungsauslaufabschnitt strömendes Medium einzubringen und Empfangssignale zu empfangen,
und wobei die übergeordnete Einheit dazu eingerichtet ist, aus den Empfangssignalen eine mittlere Permittivität des Mediums in dem Leitungsauslaufabschnitt zu ermitteln.

In einer Ausgestaltung des Systems ist das System, insb. die übergeordnete Einheit, dazu eingerichtet,
- als mittlere Permittivität in dem Leitungseinlaufabschnitt eine über einen Pfad innerhalb der Querschnittsfläche des Leitungseinlaufabschnitts gemittelte Permittivität und
- als mittlere Permittivität in dem Stauch- Abschnitt eine über einen Pfad innerhalb der Querschnittsfläche des Stauch- Abschnitts gemittelte Permittivität und
- insbesondere als mittlere Permittivität in dem Leitungsauslaufabschnitt eine über einen Pfad innerhalb der Querschnittsfläche des Leitungsauslaufabschnitts gemittelte Permittivität und
zu ermitteln.

Bspw. verläuft der Pfad im Wesentlichen entlang der vorstehend genannten Stauchrichtung, oder aber auch in einer dazu im Wesentlichen senkrechten Richtung, in welcher die Querschnittsfläche des Stauch- Abschnitts gestreckt ist.

Da die Querschnittsfläche in der Stauchrichtung gestaucht ist, ist die Querschnittsfläche - unter der Beibehaltung des gleichen Flächenmaßes der Querschnittsfläche des Stauch-Abschnitts und des Leitungseinlaufabschnitts - nämlich zwangsläufig in einer anderen Richtung gestreckt.

Bevorzugt sind die Pfade innerhalb der verschiedenen Querschnittsflächen (d.h. der des Leitungseinlaufabschnitts und der des Stauch- Abschnitts) zueinander parallel und insb. auch der Pfad innerhalb der Querschnittsfläche des Leitungsauslaufabschnitts zu den ersten beiden Pfaden.

Der Pfad, entlang dessen die mittlere Permittivität bestimmt wird, wird durch eine Aussendeeinheit der Aussende-/Empfangseinheit einerseits und eine Empfangseinheit der Aussende-/Empfangseinheit andererseits begrenzt. Die Aussendeeinheit ist daher entlang des Pfades gegenüberliegend der Empfangseinheit angeordnet, um die mittlere Permittivität entlang des Pfades zu bestimmen.

In einer Ausgestaltung des Systems ist die Querschnittsfläche in dem Leitungseinlaufabschnitt kreisförmig und die Querschnittsfläche in dem Stauch-Abschnitt ellipsenförmig.

In einer Ausgestaltung des Systems verläuft zwischen dem Leitungseinlaufabschnitt und dem Stauch-Abschnitt ein Übergangsabschnitt, zur Anpassung der unterschiedlichen Form der Querschnittsflächen.

Insbesondere wird bevorzugt auch auf dem Übergangsabschnitt dasselbe Flächenmaß (d.h. das des Leitungseinlaufabschnitts und des Stauch-Abschnitts) beibehalten.

In einer Ausgestaltung des Systems ist
- in der Strömungsrichtung die Länge des Stauch-Abschnitts und/oder des Leitungseinlaufabschnitts
   -- mindestens so groß wie der Durchmesser des jeweiligen Stauch-Abschnitts oder des Leitungseinlaufabschnitt und
      --- höchstens so groß wie das zehnfache des Durchmessers des jeweiligen Stauch-Abschnitts oder des Leitungseinlaufabschnitts.

In einer Ausgestaltung des Systems umfasst die erste Aussende-/Empfangseinheit
- zumindest eine erste Elektrode und eine zweite Elektrode,
   und die zweite Aussende-/Empfangseinheit
- zumindest eine erste Elektrode und eine zweite Elektrode.

In diesem Fall ist die mittlere Permittivität aus einer mit den Elektroden bestimmbaren Kapazität und/oder Leitfähigkeit ermittelbar. Die Mittelung über einen Pfad erfolgt dabei entlang desjenigen Pfades, entlang welchem die Elektroden gegenüberliegend angeordnet sind.

In einer zu der letztgenannten Ausgestaltung alternativen Ausgestaltung des Systems umfasst die erste Aussende-/Empfangseinheit:
- zumindest eine erste Antenne zum Aussenden von Mikrowellen und eine zweite Antenne zum Empfangen von Mikrowellen,
und die zweite Aussende-/Empfangseinheit:
- zumindest eine erste Antenne zum Aussenden von Mikrowellen und eine zweite Antenne zum Empfangen von Mikrowellen.

In diesem Fall ist die mittlere Permittivität aus Mikrowellen-Empfangssignalen, welche das Medium durchlaufen haben, ermittelbar. Bspw. anhand der Laufzeit. Bevorzugt handelt es sich um gepulste Mikrowellensende- und Empfangssignale. Auch hier erfolgt die Mittelung entlang desjenigen Pfades, entlang welchem die Antennen gegenüberliegend angeordnet sind.

In einer Weiterbildung einer der beiden letztgenannten Ausgestaltungen ist
für die erste Aussende-/Empfangseinheit in dem Leitungseinlaufabschnitt und für die zweite Aussende-/Empfangseinheit in dem Stauch-Abschnitt jeweils
- die erste Elektrode an der Rohrleitung gegenüberliegend der zweiten Elektrode angeordnet, insbesondere entlang des Pfades, oder
- die erste Antenne an der Rohrleitung gegenüberliegend der zweiten Antenne angeordnet, insbesondere entlang des Pfades.

In einer weiteren Weiterbildung des Systems umfassen die erste Aussende-/Empfangseinheit und die zweite Aussende-/Empfangseinheit jeweils:
- mehrere erste Elektroden und mehrere zweite Elektroden oder
- mehrere erste Antennen und mehrere zweite Antennen.

Die mehreren Elektroden oder mehreren Antennen dienen jeweils der Aufteilung des Leitungseinlaufabschnitts und des Stauch-Abschnitts in Teilvolumina bzw. der Aufteilung der jeweiligen Querschnittsfläche des Leitungseinlaufabschnitts und des Stauch-Abschnitts in Teilflächen. Mittels der Aufteilung kann ein in der Rohrleitung in dem Medium strömendes Objekt einem der Teilvolumina bzw. einer der Teilflächen zugeordnet werden. Die mehreren Elektroden oder mehreren Antennen können insb. derart angeordnet uns insb. zueinander beabstandet sein, dass durch sie jeweils ein Bereich abgedeckt ist, in welchem ein Objekt, insb. ein Fremdkörper, im Wesentlichen vollständig enthalten ist. Dies bspw. unter Annahme einer typischen, anzunehmenden Größe eines Objekts, insb. eines Fremdkörpers, welche ggf. durch die jeweilige Anwendung bestimmt ist und bspw. zwischen 0,2cm -3cm liegt.

In diesem Fall ist das Objekt, insb. der Fremdkörper, nur in einem der Teilvolumina oder einer der Teilflächen vorhanden. Dies minimiert den Einfluss von Störeffekten bei dem Erkennen des Vorliegens des Fremdkörpers und verbessert die Auswertung mit dem erfindungsgemäßen System.

Bevorzugt entspricht die Anzahl der ersten und zweiten Elektroden oder die Anzahl der ersten und zweiten Antennen der ersten Aussende-/Empfangseinheit der Anzahl der ersten Elektroden und zweiten Elektroden oder der Anzahl der ersten und zweiten Antennen der zweitem Aussende-/Empfangseinheit.

In einer Ausgestaltung der letztgenannten Weiterbildung verlaufen gedachte Verbindungslinien zwischen Paaren aus erster Elektrode und zweiter Elektrode oder zwischen Paaren aus erster Antenne und zweiter Antenne,
wobei alle Verbindungslinien in der jeweiligen Querschnittsfläche zueinander parallel angeordnet und insbesondere gleich beabstandet sind.

Bevorzugt liegt der gleiche Abstand nicht nur innerhalb der jeweiligen Querschnittsfläche vor, sondern der Abstand zwischen allen Verbindungslinien in allen Querschnittsflächen ist im Wesentlichen konstant.

Bevorzugt ist daher zu jedem Pfad, der durch eine Verbindungslinie in der Querschnittsfläche des Leitungseinlaufabschnitt gebildet wird, ein dazu paralleler Pfad, der durch eine entsprechende Verbindungslinie in der Querschnittsfläche des Stauch-Abschnitts gebildet wird, vorhanden. Dadurch geschieht die Aufteilung in die Teilflächen bzw. Teilvolumina in dem Leitungseinlaufabschnitt und dem Stauch-Abschnitt in gleicher Weise.

Die Erfindung umfasst auch alle vorstehend genannten Ausgestaltungen mutatis mutandis für den Leitungsauslaufabschnitt, welcher sich an den Stauch-Abschnitt anschließt.

In einer Ausgestaltung des Systems umfasst das System ein Durchflussmessgerät, zur Ermittlung des Massendurchflusses und/oder der Strömungsgeschwindigkeit des Mediums in der Rohrleitung.

Das Durchflussmessgerät dient der verbesserten Zuordnung eines erste Empfangssignals der ersten Aussende-/Empfangseinheit und eines zweiten Empfangssignals der zweiten Aussende-/Empfangseinheit zu demselben Objekt.

Bezüglich des Verfahrens wird die Aufgabe gelöst durch ein Verfahren zum Erkennen des Vorliegens eines Fremdkörpers in einem Medium in einer Rohrleitung mit einem erfindungsgemäßen System. Das Verfahren umfasst die Schritte:
- Aussenden von Aussendesignalen und Empfangen von Empfangssignalen in ein in dem Leitungseinlaufabschnitt strömendes Medium
- Aussenden von Aussendesignalen und Empfangen von Empfangssignalen in ein in dem Stauch-Abschnitt strömendes Medium;
- Ermitteln einer mittleren Permittivität des Mediums in dem Leitungseinlaufabschnitt und Ermitteln einer mittleren Permittivität des Mediums in dem Stauch-Abschnitt
- Vergleichen der mittleren Permittivität in dem Stauch-Abschnitt mit der mittleren Permittivität in dem Leitungseinlaufabschnitt
- Detektion eines Fremdkörpers in dem Medium, falls sich die mittlere Permittivität in dem Stauch-Abschnitt von der mittleren Permittivität in dem Leitungseinlaufabschnitt unterscheidet.

In einer Ausgestaltung des Verfahrens umfasst dieses die Schritte:
- Ermitteln einer mittleren Permittivität des Mediums in dem Leitungsauslaufabschnitt
- Vergleichen der mittleren Permittivität in dem Stauch-Abschnitt mit der mittleren Permittivität in dem Leitungseinlaufabschnitt und der mittleren Permittivität in dem Leitungsauslaufabschnitt.

Der Leitungsauslaufabschnitt dient also zur zusätzlichen Kontrolle, da die mittlere Permittivität in dem Leitungsauslaufabschnitt mit der mittleren Permittivität in dem Leitungseinlaufabschnitt übereinstimmen sollte.

In einer Ausgestaltung des Verfahrens umfasst dieses den Schritt:
- Detektion des Vorhandensein eines Objekts in dem Leitungseinlaufabschnitt anhand einer ermittelten mittleren Permittivität des Mediums,
wobei die Detektion des Vorhandensein des Objekts vor dem Vergleich der mittleren Permittivitäten erfolgt.

Die Erfindung wird anhand der nachfolgenden, nicht maßstabsgetreuen Figuren näher erläutert, wobei gleiche Bezugszeichen gleiche Merkmale bezeichnen. Wenn es die Übersichtlichkeit erfordert oder es anderweitig sinnvoll erscheint, wird auf bereits erwähnte Bezugszeichen in nachfolgenden Figuren verzichtet.

Es zeigen:
Fig. 1a: Eine erste Ausgestaltung eines erfindungsgemäßen System mit einer Rohrleitung in einer Seitenansicht;
Fig. 1b: Eine Draufsicht auf eine Querschnittsfläche der Rohrleitung in der ersten Ausgestaltung des erfindungsgemäßen Systems.
Fig. 1c: Eine Draufsicht auf eine weitere Querschnittsfläche der Rohrleitung in der ersten Ausgestaltung des erfindungsgemäßen Systems.
Fig. 2a: Eine zweite Ausgestaltung eines erfindungsgemäßen System mit einer Rohrleitung in einer Seitenansicht;
Fig. 2b: Eine Draufsicht auf eine Querschnittsfläche der Rohrleitung in der zweiten Ausgestaltung des erfindungsgemäßen Systems;
Fig. 2c: Eine Draufsicht auf eine weitere Querschnittsfläche der Rohrleitung in der zweiten Ausgestaltung des erfindungsgemäßen Systems;
Fig 3: Eine schematische Ansichten eines zeitlichen Verlaufs der Permittivität
Fig. 4a: Eine dritte Ausgestaltung eines erfindungsgemäßen System mit einer Rohrleitung in einer Seitenansicht;
Fig. 4b: Eine Draufsicht auf eine Querschnittsfläche der Rohrleitung in der dritten Ausgestaltung des erfindungsgemäßen Systems;
Fig. 4c: Eine Draufsicht auf eine weitere Querschnittsfläche der Rohrleitung in der dritten Ausgestaltung des erfindungsgemäßen Systems; und

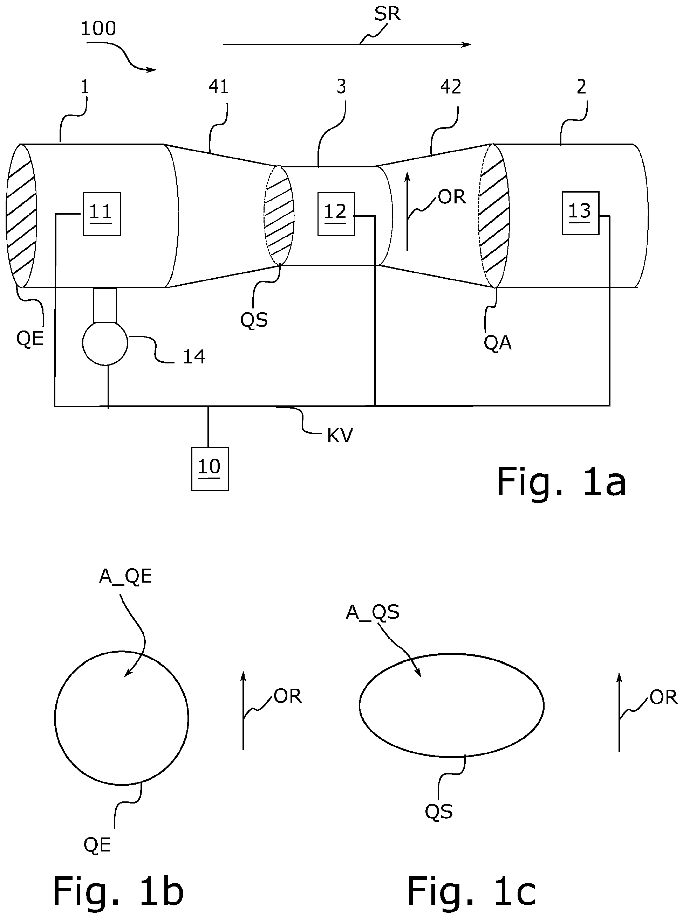

Fig. 1a zeigt ein erfindungsgemäßes System mit einer Rohrleitung 100, durch die in einer vorgegebenen Strömungsrichtung SR ein Medium (nicht dargestellt) strömt. Bei der Rohrleitung 100 handelt es sich bspw. um eine Lebensmittel führende Rohrleitung, etwa als Teil einer Abfüllanlage in der Lebensmittel-verarbeitenden Industrie. Bspw. ist die Rohrleitung angrenzend zu einer Düse der Abfüllanlage angeordnet und/oder damit assoziiert, mittels welcher Düse das Medium in ein Behältnis gefüllt wird. Das Behältnis wird anschließend verschlossen und dem Handel zugeführt.

Der Leitungseinlaufabschnitt 1 weist eine Querschnittsfläche QE auf, die hier bspw. kreisförmig ist, vgl. auch Fig. 1b. Das Medium strömt von dem Leitungseinlaufabschnitt 1 in einen Stauch-Abschnitt 3, mit einer Querschnittsfläche QS. Der Stauch-Abschnitt 3 zeichnet sich dadurch aus, dass die Querschnittsfläche QS in einer Stauchrichtung OR, welche im Wesentlichen senkrecht zu der Strömungsrichtung SR ist, gestaucht ist. Daher ist die Querschnittsfläche QS hier ellipsenförmig, vgl. auch Fig. 1c. Diese Stauchung geschieht dabei unter Beibehaltung identischer Flächenmaße. Das Flächenmaß A_QE der Querschnittsfläche QE des Leitungseinlaufabschnitts 1 entspricht daher im Wesentlichen dem Flächenmaß A_QS der Querschnittsfläche QS des Stauch-Abschnitts 3, vgl. Fig. 1b und 1c, d.h. A_QE=A_QS In einer Streckrichtung, welche im Wesentlichen senkrecht sowohl zu der Strömungsrichtung SR als auch zu der Stauchrichtung OR ist, ist die Querschnittsfläche QS daher zwangsläufig gestreckt.

An den Stauch-Abschnitt 3 schließt sich in der Strömungsrichtung SR wiederum ein Leitungsauslaufabschnitt 2 an. Dessen Querschnittsfläche QA entspricht im Wesentlichen der Querschnittsfläche QE des Leitungseinlaufabschnitts 1. Aus diesem Grund gilt A_QE=A_QS=A_QA.

Zur Anpassung der Form der unterschiedlichen Querschnittsflächen QA, QS, QE verlaufen zwischen dem Leitungseinlaufabschnitt 1 und dem Stauch-Abschnitt 3 und dem Stauch-Abschnitt 3 und dem Leitungsauslaufabschnitt 2 jeweils Übergangsabschnitte 41,42. Auch auf den Übergangsabschnitten 41,42 wird dabei bevorzugt das gleiche Flächenmaß beibehalten.

In jedem der Abschnitte 1,3,2 ist eine dazugehörige Aussende-/Empfangseinheit 11,12,13 vorgesehen: Für den Leitungseinlaufabschnitt 1 eine erste Aussende-/Empfangseinheit 11, für den Stauch-Abschnitt 3 eine zweite Aussende-/Empfangseinheit 12 und für den Leitungsauslaufabschnitt 2 eine dritte Aussende-/Empfangseinheit 13. Jeder der Aussende-/Empfangseinheiten 11,12,13 ist dazu ausgestaltet, in ihrem jeweiligen Abschnitt 1;3;2 Aussendesignale in ein in dem jeweiligen Abschnitt 1;3;2 strömendes Medium einzubringen und Empfangssignale zu empfangen. Die Empfangssignale werden anschließend an eine übergeordnete Einheit 10 übermittelt und dann ausgewertet. Der Leitungsauslaufabschnitt 2 ist dabei für die Erfindung nicht wesentlich und dient nur einer zusätzlichen Überprüfung.

Die übergeordnete Einheit 10 ist mit den Aussende-/Empfangseinheiten 11,12,13 mittels einer Kommunikationsverbindung KV verbunden. Bei der Kommunikationsverbindung KV handelt es sich bspw. um eine drahtgebundene Kommunikationsverbindung KV bspw. um eine analoge Messübertragungsstrecke, insb. nach dem 4-20mA Standard, oder um einen drahtgebundenen Feldbus der Automatisierungstechnik, bspw. Foundation Fieldbus, Profibus PA, Profibus DP, HART, CANBus. Es kann sich aber auch um eine Kommunikationsverbindung eines modernen industriellen Kommunikationsnetzwerks, bspw. einen "Industrial Ethernet"-Feldbus, insbesondere Profinet, HART-IP oder Ethernet/IP oder eines aus dem Kommunikationsbereich bekanntes Kommunikationsnetzwerk, bspw. Ethernet nach dem TCP/IP-Protokoll, handeln.

Für den Fall, dass die Kommunikationsverbindung KV drahtlos ist, kann es sich zum Beispiel um ein Bluetooth, ZigBee-, WLAN-, GSM-, LTE-, UMTS-Kommunikationsnetzwerk oder aber auch eine drahtlose Version eines Feldbusses, insbesondere 802.15.4 basierte Standards wie WirelessHART handeln.

Für das erfindungsgemäße System ist es dabei vollkommen unerheblich, ob es- wie in Fig. 1a der Übersichtlichkeit halber dargestellt- eine einzige übergeordnete Einheit 10 umfasst, oder ob es für jede der Aussende-/Empfangseinheiten 11,12,13 eine eigene übergeordnete Einheit aufweist, welche miteinander über Kommunikationsverbindungen KV verbunden und/oder mit einer weiteren übergeordneten Einheit mit einer Kommunikationsverbindung KV verbunden sind.

Bei der übergeordneten Einheit 10 handelt es sich bspw. um eine übergeordnete Steuerungseinheit, bspw. ein Prozessleitsystem mit einem Rechner oder um eine speicherprogrammierte Steuerungseinheit (SPS), oder aber auch um eine Transmittereinheit, in einer abgesetzten oder ggf. nicht-abgesetzten Variante.

Ferner umfasst das System noch ein Durchflussmessgerät 14, mit dem die Durchflussgeschwindigkeit und/oder der Massedurchfluss des Mediums in dem Leitungseinlaufabschnitt 1 der Rohrleitung 100 bestimmbar ist. Auch das Durchflussmessgerät 14 übermittelt über die Kommunikationsverbindung KV die mit dem Durchflussmessgerät 14 ermittelten Messwerte an die übergeordnete Einheit 10. Das Durchflussmessgerät 14 dient dazu, auf Basis der Durchflussgeschwindigkeit und/oder des Massedurchflusses ein mit der ersten Aussende-/Empfangseinheit 11 empfangenes Empfangssignal und ein mit der zweiten Aussende-/Empfangseinheit 12 empfangenes Empfangssignal besser mit demselben Objekt 5, nämlich einem Fremdkörper 51 oder einer Gasblase 52, korrelieren zu können.

Die übergeordnete Einheit 10 ermittelt aus den Empfangssignalen eine mittlere Permittivität epsilon_m,1; epsilon_m,3 und epsilon_m,2 für jedem der Abschnitte 1,3,2 und stellt anhand eines Vergleichs der mittleren Permittivität epsilon_m,1; epsilon_m,3 und epsilon_m,2 fest, ob es sich bei einem in dem Medium vorliegenden Objekt 5 um einen Fremdkörper 51 oder um eine Gasblase 52 handelt. Insbesondere ist die übergeordnete Einheit 10 dazu eingerichtet und/oder die erste Aussende-/Empfangseinheit 11 und zweite Aussende-/Empfangseinheit 12 sind derart angeordnet, dass die mittleren Permittivitäten epsilon_m,1 und epsilon_m,3 entlang paralleler Pfade, bspw. beide entlang derselben Stauchrichtung OR, ermittelt werden.

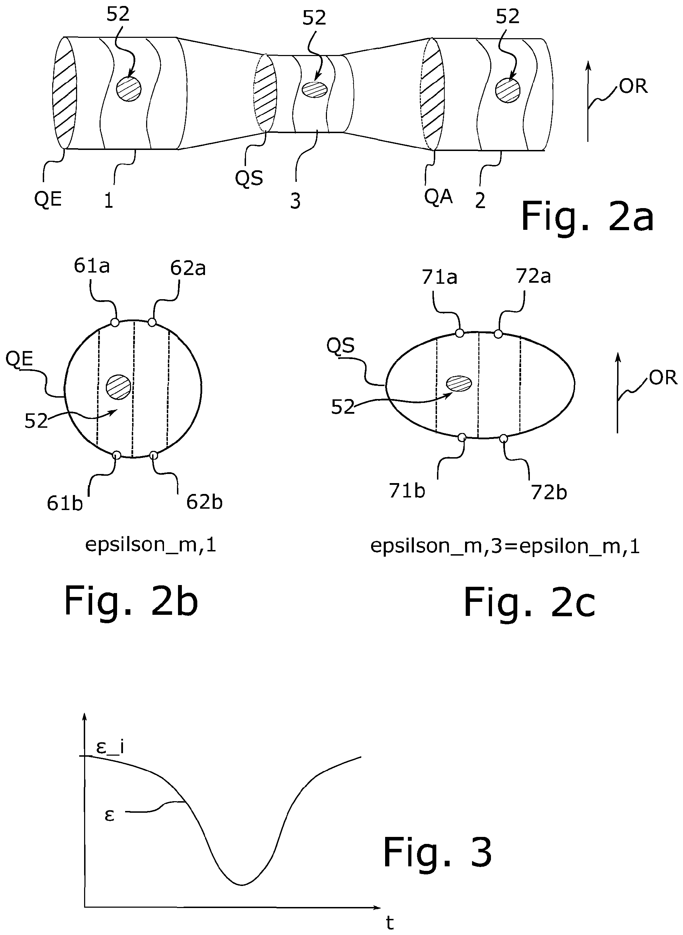

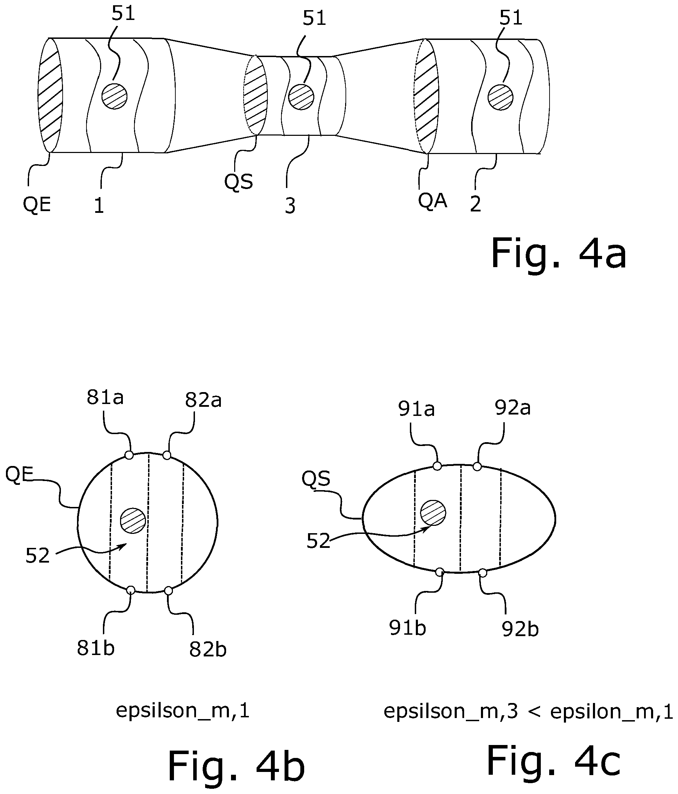

Dies ist in den folgenden Fig. 2a bis Fig. 2c für den Fall einer Gasblase 52 und Fig. 4a bis Fig. 4c für den Fall eines Fremdkörpers 51 näher dargestellt. Das System aus den Fig 2a bis 2c und Fig 4a bis 4c entspricht dabei im Wesentlichen dem bereits in den Fig. 1a bis 1c gezeigten System und unterscheidet sich wie nachfolgend näher dargestellt nur in den unterschiedlich ausgestalteten Aussende-/Empfangseinheiten 11,12,13, jeweils in der zweiten Ausgestaltung (Fig. 2a bis 2c) oder der dritten Ausgestaltung (Fig. 4a bis 4c) des Systems.

Fig. 2a zeigt, für den Fall, dass eine Gasblase 52 von dem Leitungseinlaufabschnitt 1 in den Stauch-Abschnitt 3 strömt, dass diese in der Stauchrichtung OR in dem Stauch-Abschnitt 3 gestaucht oder gequetscht wird, um dann anschließend wieder in dem Leitungsauslaufabschnitt 2 (dessen Querschnittsfläche QA identisch mit der Querschnittsfläche QE des Leitungseinlaufabschnitt 1 ist) die vorherige Größe anzunehmen.

Die erste Aussende-/Empfangseinheit 11 in dem Leitungseinlaufabschnitt 1 umfasst hier, siehe Fig. 2b, zwei erste Elektroden 61a,62a und zwei zweite Elektroden 61b,62b. Jeweils eine erste Elektrode 61a;62a ist entlang einer gedachten Verbindungslinie gegenüberliegend einer zweiten Elektroden 61b;62b angeordnet. Die Verbindungslinie verläuft also z.B. von der ersten Elektrode 61a zu der zweiten Elektrode 61b. Durch die mehreren Elektroden 61a,61b,62a,62b wird eine Aufteilung der Querschnittsfläche QE des Leitungseinlaufabschnitt 1 in mehrere Teilflächen erreicht, wobei sich die Gasblase 52 in dem Leitungseinlaufabschnitt 1 nur in einer der Teilflächen befindet. Dies ist durch die gestrichelten Linien in Fig. 2b angedeutet.

Gleiches gilt für die zweite Aussende-/Empfangseinheit 12 in dem Stauch-Abschnitt 3, siehe Fig. 2c. Diese umfasst zwei erste Elektroden 71a, 72a und zwei zweite Elektroden 71b,72b. Die erste Elektroden 71a ist entlang einer gedachten Verbindungslinie gegenüberliegend einer zweiten Elektroden 71b und eine weitere erste Elektroden 72a entlang einer gedachten Verbindungslinie gegenüberliegend einer weiteren zweiten Elektroden 72b angeordnet. Alle Verbindungslinien sind zueinander parallel. Ferner stimmt der Abstand zwischen den Verbindungslinien der Elektroden 61a,61b,62a,62b der ersten Aussende-/Empfangseinheit 11 mit dem Abstand zwischen den Verbindungslinien der Elektroden 71a,71b,72a,72b der zweiten Aussende-/Empfangseinheit 12 überein und jeweils eine Verbindungslinie aus der Querschnittsfläche QE des Leitungseinlaufabschnitts 1 ist parallel zu einer Verbindungslinie des Stauch-Abschnitts 3.

Über die in der Querschnittsfläche QE, QS einander gegenüberliegend angeordneten Paare der Elektroden 61a,61b;62a,62b;71a,71b;72a,72b wird eine zwischen den Elektroden Paaren der Elektroden 61a,61b;62a,62b;71a,71 b;72a,72b vorliegende elektrische Kapazität und/oder eine Leitfähigkeit als Empfangssignal von den Aussende-/Empfangseinheiten 11,12 empfangen und an die übergeordnete Einheit 10 (vgl. Fig. 1a) übermittelt.

Die übergeordnete Einheit 10 ermittelt dann eine mittlere Permittivität epsilon_m,2 bzw. epsilon_m,3 des Mediums, jeweils für die Querschnittsfläche QE des Leitungseinlaufabschnitts 1 und die Querschnittsfläche QS des Stauch-Abschnitt 3. Dies entlang des Pfades, der durch die gegenüberliegend angeordneten Paare der Elektroden 61a,61b;62a,62b;71a,71b;72a,72b begrenzt ist. Die Permittivität epsilon wird im Stand der Technik auch als dielektrische Leitfähigkeit oder Dielektrizitätskonstante bezeichnet.

In einer Ausgestaltung wird dabei insb. zunächst, das Vorhandensein eines Objekts 5 überhaupt in dem Medium, nämlich eines Fremdkörpers 51 oder einer Gasblase 52 in dem in der Rohrleitung 100 strömenden Medium ermittelt. Dies anhand bspw. einer Auswertung eines zeitlichen Verlaufs der mittleren Permittivität epsilon_m,1 in dem Leitungseinlaufabschnitt 1, wie in Fig. 3 näher dargestellt.

Die Erfindung eignet sich besonders für runde Objekte 5, so dass durch den Druckunterschied beim Übergang von dem Leitungseinlaufabschnitt 1 in den Stauch-Abschnitt 3 keine oder im Wesentlichen kaum Verwirbelungen oder Drehungen des Objekts hervorgerufen würden, welche einen unerwünschten Einfluss auf die entlang des Pfades ermittelte mittlere Permittivität epsilon_m1; epsilon_m,3 hätten.

Fig. 3 zeigt einer ermittelte mittlere Permittivität epsilon_m,1 als Funktion der Zeit, bspw. in der Querschnittsfläche QE des Leitungseinlaufabschnitts 1, für den Fall eines durch den Leitungseinlaufabschnitt 1 strömenden Objekts 5. Die mittlere Permittivität epsilon_m,1 wird hierzu bspw. als eine ortsabhängige Funktion ermittelt und anhand einer bekannten und/oder ermittelten Fließgeschwindigkeit des Mediums in eine zeitabhängige Funktion umgerechnet. Dies bspw. mittels des vorstehend erwähnten und in Fig. 1 gezeigten Durchflussmessgeräts 14. Selbstverständlich ist es auch möglich, direkt eine ortsabhängige Funktion zu analysieren. Eine Speicherung des zeitlichen Verlaufs der mittleren Permittivität epsilon_m,1 erfolgt dabei bspw. in einer Speichereinheit, die mit der übergeordneten Einheit 10 assoziiert oder zumindest damit verbunden ist.

Durch das Auftauchen des Objekts 5 in dem Medium erniedrigt sich in dem zeitlichen Verlauf die mittlere Permittivität epsilon_m,1 in einem umgedrehten Peak auf ein lokales Minimum siehe Fig. 3, ausgehend von einer anfänglichen Permittivität epsilon_i des Mediums 1, um dann anschließend wieder auf die anfängliche Permittivität epsilon_i anzusteigen. Hierbei zeigt Fig. 3 bereits einen Zeitverlauf von einem räumlich integriertem Mittelwert der Permittivität entlang desjenigen Pfades, an dessen entgegengesetzten Enden die einander gegenüberliegend angeordneten Paare der Elektroden 61a,61b;62a,62b in der Querschnittsfläche QE des Leitungseinlaufabschnitts1 angeordnet sind. Auch für den Stauch-Abschnitt 3 ergibt sich ein ähnlicher zeitlicher Verlauf wie der in Fig. 3 für den Leitungseinlaufabschnitt 1 gezeigt, für die mittlere Permittivität epsilon_m,3.

Für den Fall eines im Wesentlichen wasserbasierten Mediums weist das Medium ohne Objekt eine mittlere Permittivität epsilon_i von ca. 80 auf, wohingegen ein Fremdkörper 22 (je nachdem, aus welchem Material er besteht) typischerweise eine Permittivität epsilon im Bereich zwischen 2 bis 8 aufweist. Dies liegt in ähnlichen Bereichen wie die Permittivität epsilon einer Gasblase 52, wodurch das Unterscheiden zwischen einer Gasblase 52 und einem Fremdkörper 51, nur aufgrund der Auswertung des zeitlichen Verlaufs der mittleren Permittivitäten epsilon_m,1 in dem Leitungseinlaufabschnitt 1 ohne weitere Maßnahmen nicht immer möglich ist.

Die erfindungsgemäße Vorrichtung bzw. das erfindungsgemäße Verfahren löst dies, indem die mittlere Permittivität epsilon_m,1 in dem Leitungseinlaufabschnitt 1 mit der mittleren Permittivität epsilon_m,3 in dem Stauch-Abschnitt 3 verglichen wird. Konkret wird bei dem Vergleich jeweils eine mittlere Permittivität epsilon_m,1 in dem Leitungseinlaufabschnitt 1 ermittelt und eine mittlere Permittivität epsilon_m,3 bzw. in dem Stauch-Abschnitt 3 ermittelt. Als mittlere Permittivität epsilon_m wird dabei der über die gegenüberliegend angeordneten Paare der Elektroden 61a,61b;62a,62b bzw. 71a,71b,72a,72b bestimmbare räumliche Mittelwert bestimmt. D.h. entlang desjenigen Pfades, an dessen entgegengesetzten Enden die einander gegenüberliegend angeordneten Paare der Elektroden 61a,61b;62a,62b bzw. 71a,71b,72a,72b angeordnet sind.

Durch das Quetschen der Gasblase 52 in dem Stauch-Abschnitt 3 in der Stauchrichtung OR wird die mittlere Permittivität epsilon_m,3 in dem Stauch-Abschnitt 3 im Wesentlichen der mittleren Permittivität epsilon_m,1 in dem Leitungseinlaufabschnitt 1 entsprechen, siehe Fig. 2a und 2b. Dabei unterstützt das Durchflussmessgerät 14 die bessere Zuordnung der mittleren Permittivitäten epsilon_m,1; epsilon_m,3 zu demselben Objekt 5 (hier: Gasblase 52) bzw. das Vorhandensein der virtuellen Teilvolumina bzw. Teilflächen (mittels der Verwendung von zumindest zwei Paaren von Elektroden 61a,61b,62a,62b, ...) minimiert weiter den Einfluss von Störeffekten bei dem vorstehend genannten Vergleich.

Bei der Überprüfung, ob die mittlere Permittivität epsilon_m,1 in dem Leitungseinlaufabschnitt 1 im Wesentlichen der mittleren Permittivität epsilon_m,3 in dem Stauch-Abschnitt 3 entspricht, ist bspw. in der übergeordneten Einheit 10 und/oder der damit assoziierten Speichereinheit ein Grenzwert für eine tolerierbare Abweichung hinterlegt. Der Grenzwert hängt dabei insb. von der konkreten Ausgestaltung des Systems, darunter der Ausgestaltung der Aussende-/Empfangseinheiten 11,12 und/oder der konkreten Stauchung des in Stauchrichtung OR gestauchten Stauch-Abschnitts 3, und/oder der Größe des Objekts 5 ab. Eine weitere Spezifizierung ist daher hier nicht sinnvoll.

Die Größe des Objekts 5 kann dabei zuvor ermittelt werden. Bspw. ist anhand der Breite des umgedrehten Peaks aus Fig. 3 die Länge des Objekts 5 (d.h. Ausdehnung des Objekts 5 entlang Stauchrichtung OR) erkennbar, und anhand der Höhe des umgedrehten Peaks aus Fig. 3 die Breite (d.h. Ausdehnung des Objekts 5 entlang Strömungsrichtung SR) erkennbar. Ggf. kann alternativ oder zusätzlich die Größe des Objekts 5 auch im Vorhinein abgeschätzt werden, bspw. anhand einer Vorauswahl eines Anwenders, aufgrund Kenntnis typischer Größen potenzieller Objekte 5 in dem Medium.

Wird - ggf. unter Berücksichtigung des hinterlegten Grenzwerts - festgestellt, dass die mittlere Permittivität epsilon_m,3 in dem Stauch-Abschnitt 3 im Wesentlichen der mittleren Permittivität epsilon_m,1 in dem Leitungseinlaufabschnitt 1 entspricht, stellt die übergeordnete Einheit 10 fest, dass es sich bei dem Objekt 5 um eine Gasblase 52 handelt.

Dies kann zusätzlich noch unter Betrachtung von mit einer in dem Leitungsauslaufabschnitt 2 angeordneten, dritten Aussende-/Empfangseinheit 13 empfangenen Empfangssignalen verifiziert werden. Diese umfasst, genau wie die erste Aussende-/Empfangseinheit 11 und zweite Aussende-/Empfangseinheit 12, auch mehrere Elektroden, analog wie in Fig. 2b und 2c dargestellt (hier nicht gezeigt).

Bei Feststellen des Vorliegens einer Gasblase 52 erzeugt die übergeordnete Einheit 10 bspw. eine entsprechende Meldung, bspw. "Erkanntes Objekt 5 wird als Gasblase 52 identifiziert".

Der Fall eines Fremdkörpers 51 ist in den Fig. 4a bis 4c näher dargestellt. Hierbei entspricht das System im Wesentlichen dem vorstehend in Fig 2a bis 2c gezeigten System, wobei als einziger Unterschied hier die erste Aussende-/Empfangseinheit 11 und die zweite Aussende-/Empfangseinheit 12 statt der Elektroden 61a,61b,62a,62b,71a,71b,72a,72b aus Fig. 2b und 2c in Fig. 4b und Fig 4c hier nun Antennen 81a,81b,82a,82b,91a,91b,92a,92b umfassen. Die Antennen 81a,81b,82a,82b,91a,91b,92a,92b dienen dem Aussenden (z.B. Antennen 81a, 82a, 91a, 92a) bzw. dem Empfangen (z.B. Antennen 81b, 82b, 91b, 92b) von Ultraschallwellen. Bevorzugt handelt es sich um gepulste Ultraschallwellen. Genau wie zuvor für den Fall der Elektroden aus Fig. 2b, 2c lässt sich anhand der von den Empfangsantennen 81b, 82b, 91b, 92b empfangenen Ultraschallempfangssignale eine mittlere Permittivität epsilon_m,1 bzw. epsilon_m,3 ermitteln.

Da der Fremdkörper 51 im Wesentlichen nicht kompressibel ist, bewirkt der Druckunterschied bei dem Übergang von dem Leitungseinlaufabschnitt 1 zu dem Stauch-Abschnitt 3 kein Stauchen des Fremdkörpers 51, siehe Fig. 4a. Dies führt dazu, dass sich die (in derselben Weise wie vorstehend erläutert) ermittelte mittlere Permittivität epsilon_m,3 in dem Stauch-Abschnitt 3 spürbar von der mittlerem Permittivität epsilon_m,1 in dem Leitungseinlaufabschnitt 1 unterscheidet.

Auch hierfür liegt ggf. ein zweiter Grenzwert vor, bei dessen Überschreiten die übergeordnete Einheit 10 eine Meldung "Fremdkörper 51 wird erkannt" anzeigt.

Auf diese Weise ermöglicht das erfindungsgemäße System bzw. Verfahren eine Möglichkeit, um einen Fremdkörper 51 in einem in der Rohrleitung 100 strömenden Medium sicher und unter Ausschluss von falsch-positiven Meldungen zu identifizieren.

Selbstverständlich ist die Erfindung nicht auf die vorstehend erläuterten Elektroden 61a,61b,62a,62b, 71a,71b,72a,72b oder Antennen 81a,81b,82a,82b, 91a,91b,92a,92b beschränkt, sondern umfasst auch andere mögliche Aussende-/Empfangseinheiten 11,12, mit welchen das Ermitteln einer mittleren Permittivität epsilon_m,1 bzw. epsilon_m,3 ermöglicht ist.

Ferner ist die in Fig. 2b und Fig. 2c bzw. Fig. 4b und Fig. 4c gezeigte Anzahl der Elektroden 61a,61b,62a,62b, 71a,71b,72a,72b oder Antennen 81a,81b,82a,82b, 91a,91b,92a,92b nicht erfindungswesentlich; es ist vollkommen ausreichend, wenn zumindest zwei Elektroden 61a,61b bzw. 71a,71b (oder: Antennen 81a,81b bzw. 91a,91b) jeweils in der Querschnittsfläche QE des Leitungseinlaufabschnitts 1 und in der Querschnittsfläche QS des Stauch-Abschnitts 3 vorgesehen sind.

### Bezugszeichen und Symbole

- 100: Rohrleitung
- 1: Leitungseinlaufabschnitt
- 2: Leitungsauslaufabschnitt
- 3: Stauch-Abschnitt
- 41,42: Übergangsabschnitte
- 5: Objekt
- 51: Fremdkörper
- 52: Gasblase
- 61a,61b,62a,62b,...: Elektroden
- 71a,71b,72a,72b,...: Elektroden
- 81a,81b,82a,82b,...: Antennen
- 91a,91b,92a,92b,...: Antennen
- 10: übergeordnete Einheit
- 11: erste Aussende-/Empfangseinheit
- 12: zweite Aussende-/Empfangseinheit
- 13: dritte Aussende-/Empfangseinheit
- 14: Durchflussmessgerät

- SR: Strömungsrichtung
- OR: Stauchrichtung
- QE, QA, QS: Querschnittsfläche von 1,2,3
- A_QE, A_QA, A_QS: Flächenmaße der Querschnittsflächen
- epsilon_m,1: mittlere Permittivität in Querschnittsfläche von 1
- epsilon_m,2: mittlere Permittivität in Querschnittsfläche von 2
- epsilon_m,3: mittlere Permittivität in Querschnittsfläche von 3
- KV: Kommunikationsverbindung

## Patentansprüche

1. System zum Erkennen des Vorliegens eines Fremdkörpers (51) in einem strömungsfähigen Medium in einer Rohrleitung (100) umfassend:
- eine Rohrleitung (100) mit
-- einem Leitungseinlaufabschnitt (1) und
-- einem sich an den Leitungseinlaufabschnitt (1) in einer vorhergesehenen Strömungsrichtung (SR) anschließenden Stauch-Abschnitt (3),
in welchem Stauch-Abschnitt (3) in einer zu der Strömungsrichtung (SR) senkrechten Stauchrichtung (OR) die Querschnittsfläche (QS) der Rohrleitung (100) gestaucht ist, im Vergleich zu der Querschnittsfläche (QE) der Rohrleitung (100) in dem Leitungseinlaufabschnitt (1),
wobei das Flächenmaß (A_QS) der Querschnittsfläche (QS) der Rohrleitung (100) im Stauch-Abschnitt (3) mit dem Flächenmaß (A_QE) der Querschnittsfläche (QE) der Rohrleitung (100) im Leitungseinlaufabschnitt (1) im Wesentlichen übereinstimmt;
- eine erste Aussende/Empfangseinheit (11) in dem Leitungseinlaufabschnitt (1), welche dazu eingerichtet ist, Aussendesignale in ein in dem Leitungseinlaufabschnitt (1) strömendes Medium einzubringen und Empfangssignale zu empfangen
- eine zweite Aussende/Empfangseinheit (12) in dem Stauch-Abschnitt (3), die dazu eingerichtet ist, Aussendesignale in ein in dem Stauch-Abschnitt (3) strömendes Medium einzubringen und Empfangssignale zu empfangen; und
- zumindest eine übergeordnete Einheit (10),
welche dazu eingerichtet ist, aus den jeweiligen Empfangssignalen eine mittlere Permittivität des Mediums (epsilon_m,1) in dem Leitungseinlaufabschnitt (1) und dem Stauch-Abschnitt (3) zu ermitteln und
das Vorliegen eines Fremdkörpers (51) in dem Medium zu ermitteln, anhand zumindest eines Vergleichs der mittleren Permittivität (epsilon_m,3) in dem Stauch-Abschnitt (3) mit der mittleren Permittivität (epsilon_m,1) in dem Leitungseinlaufabschnitt (1).

2. System nach Anspruch 1,
wobei die Rohrleitung (100) einen sich an den Stauch-Abschnitt (3) in der vorhergesehenen Strömungsrichtung (SR) anschließenden Leitungsauslaufabschnitt (2) umfasst,
und wobei die Querschnittsfläche (QA) des Leitungsauslaufabschnitts (2) im Wesentlichen mit der Querschnittsfläche (QE) der Rohrleitung (100) in dem Leitungseinlaufabschnitt (1) übereinstimmt,
wobei das System eine dritte Aussende/Empfangseinheit (13) in dem Leitungsauslaufabschnitt (2) umfasst, welche dazu eingerichtet ist, Aussendesignale in ein in dem Leitungsauslaufabschnitt (2) strömendes Medium einzubringen und Empfangssignale zu empfangen,
und wobei die übergeordnete Einheit (10) dazu eingerichtet ist, aus den Empfangssignalen eine mittlere Permittivität (epsilon_m,2) des Mediums in dem Leitungsauslaufabschnitt (2) zu ermitteln.

3. System nach Anspruch 1 oder 2,
wobei das System, insb. die übergeordnete Einheit (10), dazu eingerichtet ist,
- als mittlere Permittivität (epsilon_m,1) in dem Leitungseinlaufabschnitt (1) eine über einen Pfad innerhalb der Querschnittsfläche (QE) des Leitungseinlaufabschnitts (1) gemittelte Permittivität und
- als mittlere Permittivität (epsilon_m,3) in dem Stauch- Abschnitt (3) eine über einen Pfad innerhalb der Querschnittsfläche (QS) des Stauch- Abschnitts (3) gemittelte Permittivität und
- insbesondere als mittlere Permittivität (epsilon_m,2) in dem Leitungsauslaufabschnitt (2) eine über einen Pfad innerhalb der Querschnittsfläche (QA) des Leitungsauslaufabschnitts (2) gemittelte Permittivität
zu ermitteln.

4. System nach zumindest einem der vorherigen Ansprüche,
wobei die Querschnittsfläche (QE) in dem Leitungseinlaufabschnitt (1) kreisförmig ist und die Querschnittsfläche (QS) in dem Stauch-Abschnitt (3) ellipsenförmig ist.

5. System nach zumindest einem der vorherigen Ansprüche,
wobei zwischen dem Leitungseinlaufabschnitt (1) und dem Stauch-Abschnitt (3) ein Übergangsabschnitt (41) verläuft, zur Anpassung der unterschiedlichen Form der Querschnittsflächen (QE, QS).

6. System nach zumindest einem der vorherigen Ansprüche,
- wobei in der Strömungsrichtung (SR) die Länge des Stauch-Abschnitts (3) und/oder des Leitungseinlaufabschnitts (3)
-- mindestens so groß wie der Durchmesser des jeweiligen Stauch-Abschnitts (3) oder des Leitungseinlaufabschnitt (1) und
--- höchstens so groß wie das zehnfache des Durchmessers des jeweiligen Stauch-Abschnitts (3) oder des Leitungseinlaufabschnitts (1) ist.

7. System nach zumindest einem der vorherigen Ansprüche,
wobei die erste Aussende-/Empfangseinheit (91) umfasst:
- zumindest eine erste Elektrode (61a) und eine zweite Elektrode (61b),
und wobei die zweite Aussende-/Empfangseinheit (92) umfasst:
- zumindest eine erste Elektrode (71a) und eine zweite Elektrode (71b).

8. System nach zumindest einem der vorherigen Ansprüche 1 bis 6,
wobei die erste Aussende-/Empfangseinheit (11) umfasst:
- zumindest eine erste Antenne (81a) zum Aussenden von Mikrowellen und eine zweite Antenne (81b) zum Empfang von Mikrowellen,
und wobei die zweite Aussende-/Empfangseinheit (12) umfasst:
- zumindest eine erste Antenne (91a) zum Aussenden von Mikrowellen und eine zweite Antenne (91b) zum Empfang von Mikrowellen.

9. System nach zumindest Anspruch 7 oder 8,
wobei für die erste Aussende-/Empfangseinheit (11) in dem Leitungseinlaufabschnitt (1) und für die zweite Aussende-/Empfangseinheit (12) in dem Stauch-Abschnitt (3) jeweils
- die erste Elektrode (61a;71a,...) an der Rohrleitung (100) gegenüberliegend der zweiten Elektrode (61b;71b,...) angeordnet ist, insbesondere entlang des Pfades, oder
- die erste Antenne (81a;91a,...) an der Rohrleitung (100) gegenüberliegend der zweiten Antenne (91b;91b,...) angeordnet ist, insbesondere entlang des Pfades.

10. System nach Anspruch zumindest einem der vorherigen Ansprüche 7 bis 9,
wobei die erste Aussende-/Empfangseinheit (11) und die zweite Aussende-/Empfangseinheit (12) jeweils umfassen:
- mehrere erste Elektroden (61a,62a,...; 71a,72a,...) und mehrere zweite Elektroden (61b,61b,...,71b,72b) oder
- mehrere erste Antennen (81a,82a,...;91a,92a,...) und mehrere zweite Antennen (81b,82b,...;91b,92b,...).

11. System nach Anspruch 10,
wobei gedachte Verbindungslinien zwischen Paaren aus erster Elektrode (61a,62a,...; 71a,72a,...) und zweiter Elektrode (61b,61b,...,71b,72b) oder zwischen Paaren aus erster Antenne (81a,82a,...;91a,92a,...) und zweiter Antenne (81b,82b,...;91b,92b,...) verlaufen,
und wobei alle Verbindungslinien in der jeweiligen Querschnittsfläche (QE; QS) zueinander parallel angeordnet und insbesondere gleich beabstandet sind.

12. System nach zumindest einem der vorherigen Ansprüche,
umfassend ein Durchflussmessgerät (14), zur Ermittlung des Massendurchflusses und/oder der Strömungsgeschwindigkeit des Mediums in der Rohrleitung (100).

13. Verfahren zum Erkennen des Vorliegens eines Fremdkörpers (51) in einem Medium in einer Rohrleitung (100) mit einem System nach zumindest einem der vorherigen Ansprüche 1 bis 12, umfassend die Schritte:
- Aussenden von Aussendesignalen und Empfangen von Empfangssignalen in ein in dem Leitungseinlaufabschnitt (1) strömendes Medium
- Aussenden von Aussendesignalen und Empfangen von Empfangssignalen in ein in dem Stauch-Abschnitt (3) strömendes Medium;
- Ermitteln einer mittleren Permittivität (epsilon_m,1) des Mediums in dem Leitungseinlaufabschnitt (1) und Ermitteln einer mittleren Permittivität (epsilon_m,3 ) des Mediums in dem Stauch-Abschnitt (3)
- Vergleichen der mittleren Permittivität (epsilon_m,3 ) in dem Stauch-Abschnitt (3) mit der mittleren Permittivität (epsilon_m,1) in dem Leitungseinlaufabschnitt (1)
- Detektion eines Fremdkörpers (51) in dem Medium (3), falls sich die mittlere Permittivität (epsilon_m,3) in dem Stauch-Abschnitt (3) von der mittleren Permittivität (epsilon_m,1) in dem Leitungseinlaufabschnitt (1) unterscheidet.

14. Verfahren nach Anspruch 13, umfassend die Schritte:
- Ermitteln einer mittleren Permittivität (epsilon_m,2) des Mediums in dem Leitungsauslaufabschnitt (2)
- Vergleichen der mittleren Permittivität (epsilon_m,3) in dem Stauch-Abschnitt (3) mit der mittleren Permittivität (epsilon_m,1) in dem Leitungseinlaufabschnitt (1) und der mittleren Permittivität (epsilon_m,2) in dem Leitungsauslaufabschnitt (2)

15. Verfahren nach Anspruch 13 oder 14, umfassend den Schritt:
- Detektion des Vorhandensein eines Objekts (5) in dem Leitungseinlaufabschnitt (1) anhand einer ermittelten mittleren Permittivität (epsilon_m,1) des Mediums,
wobei die Detektion des Vorhandensein des Objekts (5) vor dem Vergleich der mittleren Permittivitäten (epsilon_m,3; epsilon_m,1) erfolgt.

## Claims

1. System for detecting the presence of a foreign body (51) in a flowable medium in a pipeline (100) comprising:
- a pipeline (100) with
-- a pipe inlet section (1) and
-- an upsetting section (3) adjoining the pipe inlet section (1) in a predetermined flow direction (SR),
in which upsetting section (3), in an upsetting direction (OR) perpendicular to the flow direction (SR), the cross-sectional area (QS) of the pipe (100) is upsetting compared to the cross-sectional area (QE) of the pipe (100) in the pipe inlet section (1),
wherein the area dimension (A_QS) of the cross-sectional area (QS) of the pipeline (100) in the upsetting section (3) substantially coincides with the area dimension (A_QE) of the cross-sectional area (QE) of the pipeline (100) in the pipeline inlet section (1);
- a first transmitting/receiving unit (11) in the line inlet section (1), which is arranged to introduce transmitting signals into a medium flowing in the line inlet section (1) and to receive receiving signals
- a second transmitter/receiving unit (12) in the upsetting section (3), which is arranged to introduce transmitting signals into a medium flowing in the upsetting section (3) and to receive receiving signals; and
- at least one superordinate unit (10),
which is set up to determine an average permittivity of the medium (epsilon_m,1) in the line inlet section (1) and the compression section (3) from the respective received signals, and
to determine the presence of a foreign body (51) in the medium on the basis of at least one comparison of the mean permittivity (epsilon_m,3) in the upsetting section (3) with the mean permittivity (epsilon_m,1) in the line inlet section (1).

2. System according to claim 1,
wherein the pipeline (100) comprises a pipeline outlet section (2) adjoining the upsetting section (3) in the predicted flow direction (SR),
and wherein the cross-sectional area (QA) of the pipe outlet section (2) substantially corresponds to the cross-sectional area (QE) of the pipe (100) in the pipe inlet section (1),
wherein the system comprises a third transmitting/receiving unit (13) in the line outlet section (2), which is arranged to introduce transmitter signals into a medium flowing in the line outlet section (2) and to receive receiver signals,
and wherein the superordinate unit (10) is set up to determine an average permittivity (epsilon_m,2) of the medium in the line outlet section (2) from the received signals.

3. System according to claim 1 or 2,
whereby the system, in particular the superordinate unit (10), is configured to determine:
- as the mean permittivity (epsilon_m,1) in the line inlet section (1), a permittivity averaged over a path within the cross-sectional area (QE) of the line inlet section (1), and
- as the mean permittivity (epsilon_m,3) in the upsetting section (3) a permittivity averaged over a path within the cross-sectional area (QS) of the upsetting section (3) and
- in particular as the mean permittivity (epsilon_m,2) in the line outlet section (2) a permittivity averaged over a path within the cross-sectional area (QA) of the line outlet section (2).

4. System according to at least one of the preceding claims,
wherein the cross-sectional area (QE) in the pipe inlet section (1) is circular and the cross-sectional area (QS) in the upsetting section (3) is elliptical.

5. System according to at least one of the preceding claims,
wherein a transition section (41) runs between the pipe inlet section (1) and the upsetting section (3) to adapt the different shapes of the cross-sectional areas (QE, QS).

6. System according to at least one of the preceding claims,
- wherein in the direction of flow (SR) the length of the upsetting section (3) and/or the pipe inlet section (3)
-- at least as large as the diameter of the respective upsetting section (3) or the pipe inlet section (1) and
--- is at most as large as ten times the diameter of the respective upsetting section (3) or the pipe inlet section (1).

7. System according to at least one of the preceding claims,
wherein the first transmitting/receiving unit (91) comprises:
- at least a first electrode (61a) and a second electrode (61b),
and wherein the second transmitting/receiving unit (92) comprises:
- at least a first electrode (71a) and a second electrode (71b).

8. System according to at least one of the preceding claims 1 to 6,
wherein the first transmitting/receiving unit (11) comprises:
- at least a first antenna (81a) for emitting microwaves and a second antenna (81b) for receiving microwaves,
and wherein the second transmitting/receiving unit (12) comprises:
- at least a first antenna (91a) for emitting microwaves and a second antenna (91b) for receiving microwaves.

9. System according to at least claim 7 or 8,
wherein for the first external transmitting/receiving unit (11) in the line inlet section (1) and for the second external transmitting/receiving unit (12) in the compression section (3) in each case
- the first electrode (61a;71a,...) is arranged on the pipeline (100) opposite the second electrode (61b;71b,...), in particular along the path, or
- the first antenna (81a;91a,...) is arranged on the pipeline (100) opposite the second antenna (91b;91b,...), in particular along the path.

10. System according to claim at least one of the preceding claims 7 to 9,
wherein the first transmitting/receiving unit (11) and the second transmitting/receiving unit (12) each comprise:
- several first electrodes (61a,62a,...; 71a,72a,...) and several second electrodes (61b,61b,...,71b,72b) or
- several first antennas (81a,82a,...;91a,92a,...) and several second antennas (81b,82b,...;91b,92b,...).

11. System according to claim 10,
wherein imaginary connecting lines extend between pairs of first electrode (61a,62a,...; 71a,72a,...) and second electrode (61b,61b,...,71b,72b) or between pairs of first antenna (81a,82a,...;91a,92a,...) and second antenna (81b,82b,...;91b,92b,...),
and wherein all connecting lines in the respective cross-sectional area (QE; QS) are arranged parallel to one another and, in particular, are equally spaced.

12. System according to at least one of the preceding claims,
comprising a flow meter (14) for determining the mass flow rate and/or the flow velocity of the medium in the pipeline (100).

13. Method for detecting the presence of a foreign body (51) in a medium in a pipeline (100) with a system according to at least one of the previous claims 1 to 12, comprising the steps of:
- Transmitting outgoing signals and receiving incoming signals into a medium flowing in the pipe inlet section (1)
- Transmitting outgoing signals and receiving incoming signals into a medium flowing in the upsetting section (3);
- Determination of an average permittivity (epsilon_m,1) of the medium in the line inlet section (1) and determination of an average permittivity (epsilon_m,3 ) of the medium in the compression section (3)
- Comparison of the mean permittivity (epsilon_m,3 ) in the upsetting section (3) with the mean permittivity (epsilon_m,1) in the line inlet section (1)
- Detection of a foreign body (51) in the medium (3) if the mean permittivity (epsilon_m,3) in the upsetting section (3) differs from the mean permittivity (epsilon_m,1) in the line inlet section (1).

14. Method according to claim 13, comprising the steps of:
- Determining an average permittivity (epsilon_m,2) of the medium in the pipe outlet section (2)
- Comparison of the mean permittivity (epsilon_m,3) in the upsetting section (3) with the mean permittivity (epsilon_m,1) in the line inlet section (1) and the mean permittivity (epsilon_m,2) in the line outlet section (2)

15. Method according to claim 13 or 14, comprising the step of:
- Detection of the presence of an object (5) in the pipe inlet section (1) on the basis of a determined average permittivity (epsilon_m,1) of the medium,
wherein the detection of the presence of the object (5) takes place before the comparison of the mean permittivities (epsilon_m,3; epsilon_m,1).

## Revendications

1. système de détection de la présence d'un corps étranger (51) dans un fluide en écoulement dans une canalisation (100) comprenant
- une conduite (100) avec
-- une section d'entrée de conduite (1) et
-- une section de refoulement (3) se raccordant à la section d'entrée de conduite (1) dans une direction d'écoulement prévue (SR),
dans quelle section de refoulement (3), dans une direction de refoulement (OR) perpendiculaire à la direction d'écoulement (SR), la surface de section transversale (QS) de la conduite (100) est refoulée, par comparaison avec la surface de section transversale (QE) de la conduite (100) dans la section d'entrée de conduite (1),
la dimension de surface (A_QS) de la surface de section transversale (QS) de la conduite (100) dans la section de refoulement (3) coïncidant sensiblement avec la dimension de surface (A_QE) de la surface de section transversale (QE) de la conduite (100) dans la section d'entrée de conduite (1) ;
- une première unité d'émission/réception (11) dans la section d'entrée de conduite (1), qui est adaptée pour introduire des signaux d'émission dans un milieu s'écoulant dans la section d'entrée de conduite (1) et pour recevoir des signaux de réception
- une deuxième unité d'émission/réception (12) dans la section de refoulement (3), adaptée pour introduire des signaux d'émission dans un milieu s'écoulant dans la section de refoulement (3) et pour recevoir des signaux de réception ; et
- au moins une unité supérieure (10),
qui est conçu pour déterminer, à partir des signaux de réception respectifs, une permittivité moyenne du milieu (epsilon_m,1) dans la section d'entrée de ligne (1) et dans la section de refoulement (3), et
déterminer la présence d'un corps étranger (51) dans le milieu, à l'aide d'au moins une comparaison de la permittivité moyenne (epsilon_m,3) dans la section de refoulement (3) avec la permittivité moyenne (epsilon_m,1) dans la section d'entrée de conduite (1).

2. système selon la revendication 1,
la conduite (100) comprenant une section de sortie de conduite (2) se raccordant à la section de refoulement (3) dans la direction d'écoulement prévue (SR),
et dans lequel la surface de section transversale (QA) de la section de sortie de conduite (2) coïncide sensiblement avec la surface de section transversale (QE) de la conduite (100) dans la section d'entrée de conduite (1),
dans lequel le système comprend une troisième unité d'émission/réception (13) dans la section de sortie de conduite (2), qui est adaptée pour introduire des signaux d'émission dans un milieu s'écoulant dans la section de sortie de conduite (2) et pour recevoir des signaux de réception,
et l'unité supérieure (10) étant conçue pour déterminer, à partir des signaux de réception, une permittivité moyenne (epsilon_m,2) du milieu dans la section de sortie de conduite (2).

3. système selon la revendication 1 ou 2,
le système, en particulier l'unité supérieure (10), étant conçu à cet effet,
- comme permittivité moyenne (epsilon_m,1) dans la section d'entrée de ligne (1) une permittivité moyennée sur un chemin à l'intérieur de la surface de section (QE) de la section d'entrée de ligne (1) et
- comme permittivité moyenne (epsilon_m,3) dans la section rétreinte (3) une permittivité moyennée sur un chemin à l'intérieur de la surface de section (QS) de la section rétreinte (3) et
- en particulier comme permittivité moyenne (epsilon_m,2) dans la section de sortie de ligne (2) une permittivité moyennée sur un chemin à l'intérieur de la surface de section (QA) de la section de sortie de ligne (2)
de déterminer

4. Système selon au moins une des revendications précédentes,
dans lequel la surface de section transversale (QE) dans la section d'entrée de conduite (1) est circulaire et la surface de section transversale (QS) dans la section de refoulement (3) est elliptique.

5. Système selon au moins une des revendications précédentes,
une section de transition (41) s'étendant entre la section d'entrée de conduite (1) et la section de refoulement (3), pour adapter la forme différente des surfaces de section transversale (QE, QS).

6. Système selon au moins une des revendications précédentes,
- où, dans le sens d'écoulement (SR), la longueur de la section de refoulement (3) et/ou de la section d'entrée de conduite (3)
-- au moins aussi grand que le diamètre de la section de refoulement respective (3) ou de la section d'entrée de conduite (1) et
--- est au plus égal à dix fois le diamètre de la section de refoulement (3) respective ou de la section d'entrée de conduite (1).

7. Système selon au moins une des revendications précédentes,
dans lequel la première unité d'émission/réception (91) comprend
- au moins une première électrode (61a) et une deuxième électrode (61b),
et dans lequel la seconde unité d'émission/réception (92) comprend :
- au moins une première électrode (71a) et une deuxième électrode (71b).

8. Système selon au moins l'une des revendications 1 à 6 précédentes,
dans lequel la première unité d'émission/réception (11) comprend
- au moins une première antenne (81a) pour émettre des micro-ondes et une deuxième antenne (81b) pour recevoir des micro-ondes,
et dans lequel la deuxième unité d'émission/réception (12) comprend :
- au moins une première antenne (91a) pour émettre des micro-ondes et une deuxième antenne (91b) pour recevoir des micro-ondes.

9. système selon au moins la revendication 7 ou 8,
dans lequel, pour la première unité d'émission/réception extérieure (11) dans la section d'entrée de ligne (1) et pour la deuxième unité d'émission/réception extérieure (12) dans la section de refoulement (3), respectivement
- la première électrode (61a ; 71a, ...) est disposée sur la conduite (100) à l'opposé de la deuxième électrode (61b ; 71b, ...), en particulier le long du trajet, ou
- la première antenne (81a ; 91a, ...) est disposée sur la conduite (100) en face de la deuxième antenne (91b ; 91b, ...), en particulier le long du chemin.

10. Système selon au moins une des revendications précédentes 7 à 9,
dans lequel la première unité d'émission/réception extérieure (11) et la seconde unité d'émission/réception extérieure (12) comprennent chacune :
- plusieurs premières électrodes (61a, 62a, ... ; 71a, 72a, ...) et plusieurs secondes électrodes (61b, 61b, ..., 71b, 72b) ou
- plusieurs premières antennes (81a, 82a,...;91a, 92a,...) et plusieurs secondes antennes (81b, 82b,...;91b, 92b,...).

11. système selon la revendication 10,
des lignes de connexion imaginaires s'étendant entre des paires de première électrode (61a, 62a, ... ; 71a, 72a, ...) et de deuxième électrode (61b, 61b, ..., 71b, 72b) ou entre des paires de première antenne (81a, 82a, ... ; 91a, 92a, ...) et de deuxième antenne (81b, 82b, ... ; 91b, 92b, ...),
et toutes les lignes de liaison étant disposées parallèlement les unes aux autres dans la surface de section transversale respective (QE ; QS) et étant en particulier équidistantes les unes des autres.

12. Système selon au moins une des revendications précédentes,
comprenant un débitmètre (14), pour déterminer le débit massique et/ou la vitesse d'écoulement du fluide dans la conduite (100).

13. Procédé de détection de la présence d'un corps étranger (51) dans un fluide dans une canalisation (100) avec un système selon au moins l'une des revendications précédentes 1 à 12, comprenant les étapes consistant à :
- l'émission de signaux d'émission et la réception de signaux de réception dans un milieu s'écoulant dans la section d'entrée de conduite (1)
- émission de signaux d'émission et réception de signaux de réception dans un milieu s'écoulant dans la section de refoulement (3) ;
- détermination d'une permittivité moyenne (epsilon_m,1) du fluide dans la section d'entrée de conduite (1) et détermination d'une permittivité moyenne (epsilon_m,3 ) du fluide dans la section de refoulement (3)
- comparer la permittivité moyenne (epsilon_m,3 ) dans la section de refoulement (3) à la permittivité moyenne (epsilon_m,1) dans la section d'entrée de ligne (1)
- détection d'un corps étranger (51) dans le milieu (3) si la permittivité moyenne (epsilon_m,3) dans la section de refoulement (3) est différente de la permittivité moyenne (epsilon_m,1) dans la section d'entrée de ligne (1).

14. Procédé selon la revendication 13, comprenant les étapes consistant à :
- détermination d'une permittivité moyenne (epsilon_m,2) du milieu dans la section de sortie de conduite (2)
- comparer la permittivité moyenne (epsilon_m,3) dans la section de refoulement (3) avec la permittivité moyenne (epsilon_m,1) dans la section d'entrée de ligne (1) et la permittivité moyenne (epsilon_m,2) dans la section de sortie de ligne (2)

15. Procédé selon la revendication 13 ou 14, comprenant l'étape consistant à :
- la détection de la présence d'un objet (5) dans la section d'entrée de conduite (1) à l'aide d'une permittivité moyenne déterminée (epsilon_m,1) du milieu,
la détection de la présence de l'objet (5) étant effectuée avant la comparaison des permittivités moyennes (epsilon_m,3 ; epsilon_m,1).
